# EUROPEAN PATENT APPLICATION

(11) **EP 1 780 725 A1**
(43) Date of publication of application: **02.05.2007**
(21) Application number: 06076882.7
(22) Date of filing: 13.10.2006
(51) Int. Cl.: G11B 27/34, G11B 27/10, G06F 17/30

(54) **System and method for organizing information**

(30) Priority: 28.10.2005 US 261307
(71) Applicant: Delphi Technologies, Inc., Troy, MI 48007 (US)
(72) Inventor: Toms, Mona L., Carmel, IN 46032 (US); Sencaj, Randall W., Carmel, IN 46032 (US)
(74) Representative: Denton, Michael John

(57) **Abstract**

An audio player device (30), and method (52, 57, 58, 59, 62, 66, 70) of controlling an audio player device (30), including a microprocessor (32) for manipulating music content wherein the music content includes songs and classification information associated with the songs, a storage device (36) connected to the microprocessor (32) for storing the music content, a user display device (38) for displaying one or more classification categories associated with the music content, wherein the microprocessor (32) is adapted to permit the user to select one or more classification categories associated with the classification information of the music content and is adapted to play all of the songs associated with the one or more selected classification categories without requiring the user to filter (58) the one or more classification categories. A method (52, 57, 58, 59, 62, 66, 70) is also disclosed for presenting hierarchal information to a user including presenting to a user one or more classification categories of information associated with music content, presenting to a user one or more selection options within the one or more classification categories (57) and one or more filters and prompting the user to make one or more selections from the one or more selection options. If the user does not select at least one filter (60), a playlist is compiled (59) of all songs encompassed by the specific selection made by the user. If the user does select at least one filter (64), the at least one filter is applied (66) to the selected options.

## Description

### TECHNICAL FIELD

This invention generally relates to systems and methods for organizing information and more particularly relates to systems and methods for organizing a hierarchy of information to be presented to a user.

### BACKGROUND OF THE INVENTION

Specialized devices for storing and playing music have grown in popularity over the last ten years. These specialized devices are typically known as "media players" and in the most popular embodiments, they are portable and capable of storing a vast quantities of music. For example, it is not unusual for media players to have 20 gigabytes of storage which, in turn, can hold well over 5,000 songs in a resident music library data base. However, regardless of the number of songs a media player is capable of holding, a device is only as useful as its user interface. If the user interface is not intuitive, easy-to-use, and flexible (i.e. accommodate multiple ways that users desire to access the music library data base), the benefit rendered to the user is marginal regardless of how many songs the media player is capable of storing. One of the most notable and widely recognized media player user interface is that used in the Apple™ iPod™. Popular reviews have touted the iPod™ interface as easy-to-use primarily due to its unique thumbwheel design that allows a user to easily scroll through the iPod's™ hierarchical menu system. The iPod's™ menu structure provides various "views" into the song library by using genre, artist name, album name, or song name.

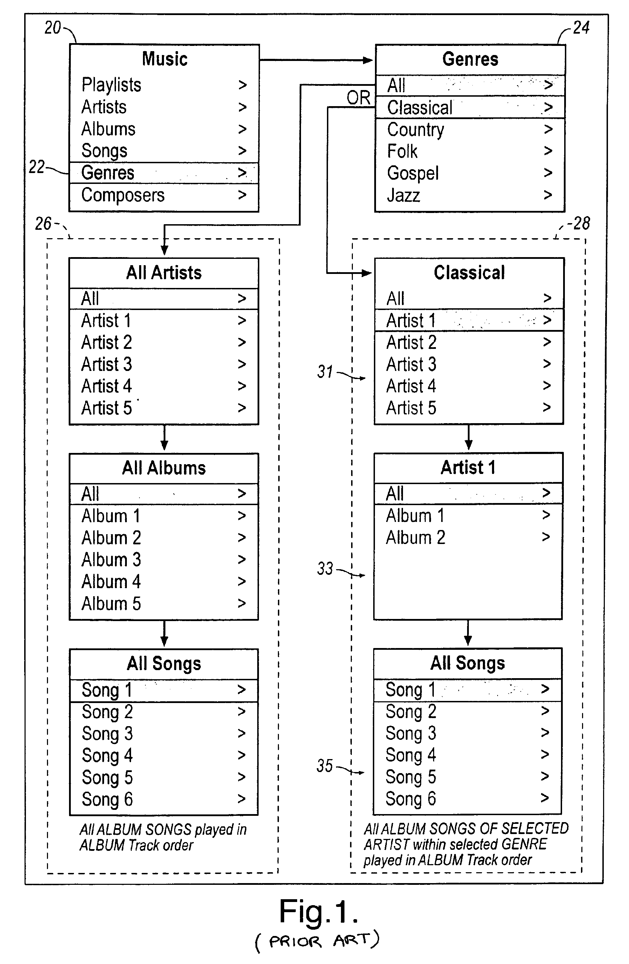

Although the iPod^{®} has met with wide acceptance, one of the limitations of its hierarchical menu structure is that only one selection can be made at each menu level. For example (see Figure 1), from the Music screen 20, if a user selects Genres 22, screen 24 (the Genres screen) is presented to the user. From the Genres screen 24, only one Genre selection at a time can be elected for play or can be saved in a temporary play list. If a user wanted to listen to two different Genres (e.g. folk and gospel) in a single listing session, the user would have to first select the first Genre and thereafter step through all of the associated subordinate screen prompts (such as artist 31, album 33, and song 35). Thereafter, the user would go back to the Genres screen 24 and save the Genres selection to the temporary play list. Then the user would then make a second genre selection (followed by the associated subordinate screen prompts) and save it to the same temporary playlist. Thereafter, the user would select the play list for playing.

Although the type of hierarchical menu structure employed by the iPod™ device is intuitive (and accordingly, easy-to-use), it is slow, cumbersome and inflexible.

The system and method of the present invention sets forth a way of organizing information that is intuitively presented to the user, but is done so in a way that is flexible and fast.

### SUMMARY OF THE INVENTION

An audio player device (30), comprising:
a microprocessor (32) for manipulating music content, wherein said music content includes songs and classification information associated with said songs,
a storage device (36) connected to said microprocessor (32) for storing said music content,
a user display device (38) for displaying one or more classification categories associated with said music content,
wherein the microprocessor (32) is adapted to permit the user to select one or more classification categories associated with said classification information of said music content and is adapted to play all of the songs associated with the one or more selected classification categories without requiring the user to filter (50) the one or more selected classification categories.

### BRIEF DESCRIPTION OF THE DRAWINGS

FIG. 1 is a prior art flow diagram of how information is presented to a user of the Apple™ iPod™;
FIG. 2 is an example of one possible application of the present invention as a device that is useable both within a vehicle, or remotely from the vehicle;
FIG. 3 is a schematic drawing of a hardware embodiment of the device of the present invention;
FIG. 4-7 are various methodologies for presenting screen selections to a user.
FIG. 8 is a logic flow diagram of a method embodiment of the present invention.

### DESCRIPTION OF THE PREFERRED EMBODIMENTS

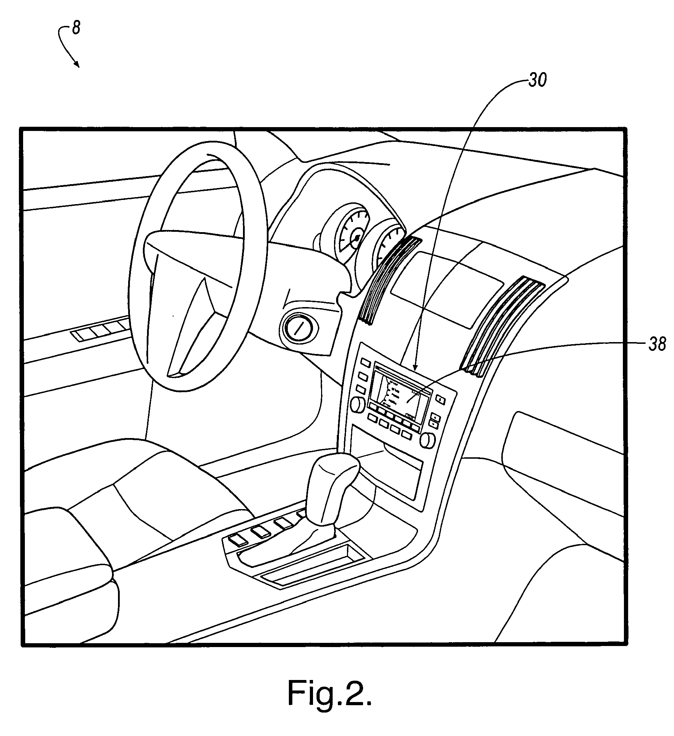

Figure 2 depicts one possible use for the present invention. In this application, vehicle 8 is provided with media storage and entertainment device 30. Device 30 can be fitted into a predetermined slot in the dash panel of the vehicle 8 as a permanent fixture. However, it is also contemplated that device 30 can be mounted on a slide interface thereby allowing it to be easily removed from the vehicle dashboard so that it can function remotely from the vehicle.

An embodiment of the present invention uses a user interface that allows the user to make multiple selections at various hierarchical levels of an interface of a media player device 30. This, in turn, gives the user extensive flexibility for music selection and play. The interface uses a hierarchical menu structure which gives the user the option to make one or more selections at each hierarchical level. Thus, at any level, the user has the option to play all of the songs associated with each selection made or, the user may progress one step deeper into the hierarchy to further refine (i.e. filter) the selections. An embodiment of the invention is most easily described in conjunction with an example set forth in Figures 2-6.

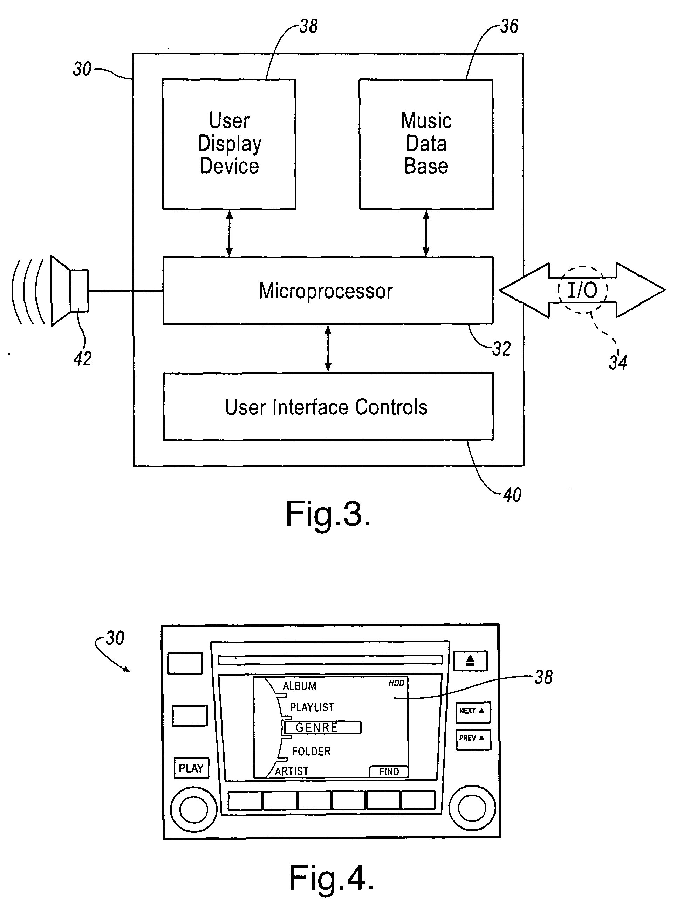

Now referring to Figures 2 and 3, an embodiment of the disclosed media player device 30 may include microprocessor 32 for receiving music content through I/O port 34 and for storing the music content in music database 36. Microprocessor 32 is also responsible for coordinating the display of information on user display device 38 and it is also responsible for receiving and outputting information from and to various user interface controls 40 found on the face of device 30. An audio reproduction device 42 (such as a speaker, or the like) interfaces with microprocessor 32 in order to produce an audio replication of songs stored on the music database 36.

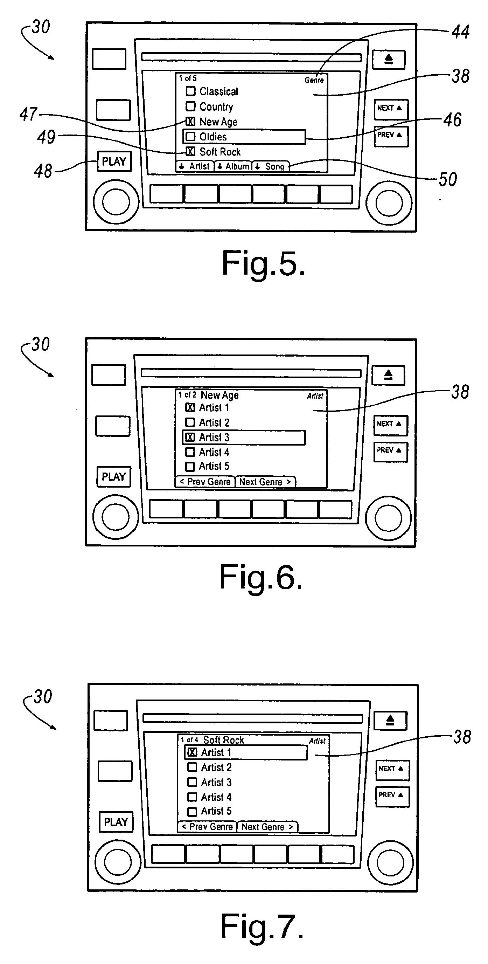

Now referring to Figures 2, 3 and 4, in a default mode, user display device 38 sets forth the initial options (classification categories) at the user's disposal (see Figure 4). These initial options can be "album", "play list", "genre", "folder", "artist", and the like. If, for example, the user selects the Genre, the user is then presented with a screen as shown in Figure 5 on the user display device 38.

The screen presented to the user in Figure 5, presents the user with a previous selection field 44 and one or more subcategory fields 46 (exemplified at reference numeral 46). The previous selection field 44 sets forth the previous menu selection made by the user (which was responsible for bringing the user to the current screen). Also set forth in Figure 5 is one or more subcategory fields (exemplified at 46, 47, 49) which set forth subcategory options that the user may select. The subcategory options set forth in subcategory field 46 are subcategories of the selection set forth in selection field 44. Any or all of the subcategories set forth in Figure 5 may be selected by the user. The user is not restricted to selecting one, and only one, of the options set forth in subcategory field 46. For example, in the embodiment set forth in Figure 5, the user has exercised a selection option of selecting both the "new age" and "soft rock" genres. The user makes the selections by using one or more of the interface controls 40 found on the face plate of device 30. The use and implementation of user interface controls is well known to those skilled in the art.

If, after selecting both the "new age" and "soft rock" genres, the user selects the PLAY 48 interface control, song play will commence beginning with the first song associated with the first selected genre and play will continue until the last song associated with the last selected genre has been played. The reference to "a first song" and "a last song" is simply a general reference to a sequential playing of each song categorized by each of the selected genres. Songs may be played in any order including, but not limited to, playing the songs in alphabetical order according to the genre title, artists name, album name, song title, or the like. If the user wishes to play the songs within the selected genre in a random order, a simple randomizer routine can be implemented within microprocessor 32 to select and play each of the songs found within the selected genre in a random order. The user may also be given the option of selecting the order in which the songs are played (e.g. by genre, artist, etc.) Display device 38 may also include a filter field 50. Within filter field 50, the user may be presented with one or more filters that the user can apply to the selections made in one or more subcategory field 46. For example, in Figure 5, an "artist" filter, an "album" filter, and a "song" filter is presented to the user. These filters may be presented to the user in a "grayed out" format. When information is presented to the user in the filter field 50 in a "grayed out" format, this indicates to the user that these filters are not applicable (for any number of reasons) at this stage of compiling a playlist. Once the filter selection is available to the user, the filter field is changed from its "grayed-out" format to its regular (i.e. non-grayed out) format.

Now referring to Figure 6, if the user wishes to filter the subcategory fields (e.g. 47 and 49 - see Figure 5), the user selects one of the filters in filter field 50 (e.g. Artist) and immediately the user is presented with a screen display such as shown in Figure 6 wherein the user is given the selection option to play music only performed by one or more select artists found within the first selected genre. This is known as a positive filter. Other filter modes could be used such as a negative filter mode where any selection made by the user will not be included in the play list.

In the example of Figure 6, the artist has elected to play only music performed by artist 1 and artist 3 within "new age" genre. Next, the user selects the appropriate navigation control to advance to the next genre screen (see Figure 7) where all of the artists associated with the "soft rock" genre are presented. From the screen set forth in Figure 7, the user is given the option of selecting one or more artists associated with "soft rock" genre. Although the detail steps associated with the artist's filter are shown in Figures 6 and 7, one skilled in the art can readily recognize that these same filter techniques can be associated with any number of categories associated with genre such as album title, song title, and the like.

In the embodiment shown in Figures 4-7, soft key labels are shown associated with the selection of filter fields 50 and "genre" navigation. The use of soft key labels is often desirable because they allow a fixed number of user interface control switches to be used in various contexts depending on the information presented on the currently displayed screen.

After the "genre" selections are made and the appropriate filters (if any) are applied by the user, the user presses the "play" button and the microprocessor 32 sequentially retrieves the songs from music database 32 and outputs them to output device 42 if they fall within the selected genre and meet the requirements established by the user selected filters (if any).

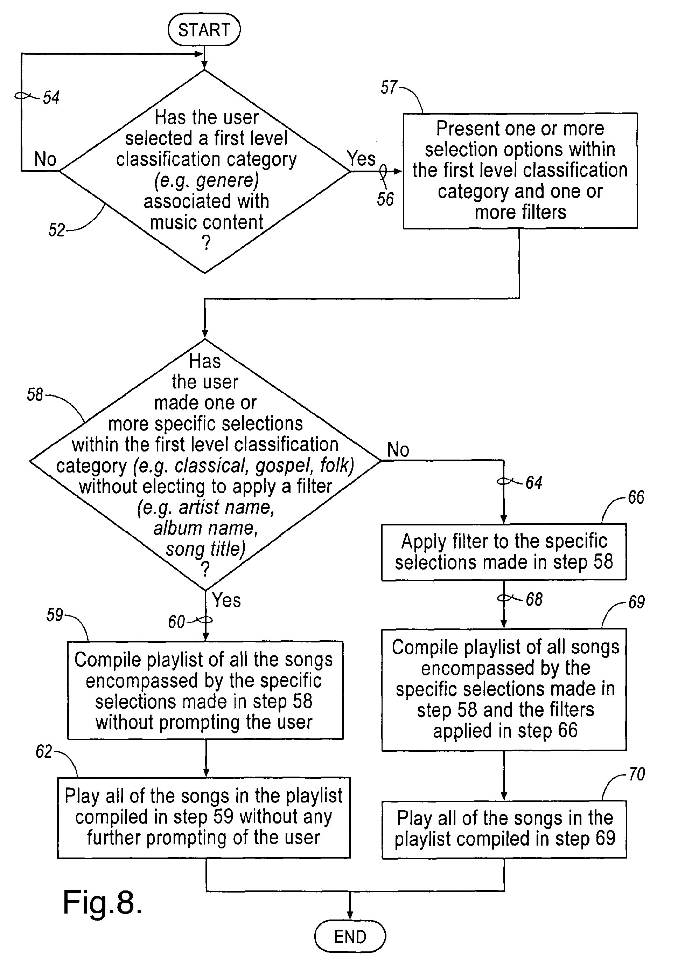

Now referring to Figure 8, in an embodiment of the method of the present invention, the user interface controls 40 are monitored by microprocessor 32 to determine if the user has selected a first level classification category 52. If the user has not yet selected a first level classification category, the software routine simply loops back upon itself 54 to continually monitor the user selection 52. Once the user has selected a first level classification category 56, the user is then presented with a single screen (see Figure 5) which displays one or more selection options within the first level classification category and also one or more filters 57. If the user makes one or more selections within the first level classification category without electing to apply one or more filters 50, then the device 30 proceeds 60 to play all of the songs encompassed by the selections made in step 58 without any further prompting of the user 62. On the other hand, if the user has made one or more selections within the first level classification category and has also elected to apply one or more filters 50 to the selections, then path 64 is followed and the filters are applied (step 66) to the specific selections made in step 58.

After procedure 66 is complete, a playlist is compiled 69 of all songs that fall within a specific selection made in 58 and that satisfy the filters applied in step 66. The filter criteria can be couched in the positive or negative. Specifically, the user may elect to apply a filter that allows (positive filter) all songs to be played that meet a certain filter criteria or a filter can be applied that it prevents (negative filter) from playing if they meet the filter criteria. Lastly, in block 70, all of the songs compiled in the playlist of step 69 are played.

Having described the embodiments of the present invention, it will be understood that various modifications or additions may be made to the embodiments chosen here to illustrate the present invention, without departing from the spirit of the present invention. Accordingly, it is to be understood that subject matter sought to be afforded protected hereby shall be deemed to extend to the subject matter defined in the appended claims, including all fair equivalents thereof.

## Claims

1. An audio player device (30), comprising:
a microprocessor (32) for manipulating music content, wherein said music content includes songs and classification information associated with said songs,
a storage device (36) connected to said microprocessor (32) for storing said music content,
a user display device (38) for displaying one or more classification categories associated with said music content,
wherein the microprocessor (32) is adapted to permit the user to select one or more classification categories associated with said classification information of said music content and is adapted to play all of the songs associated with the one or more selected classification categories without requiring the user to filter (50) the one or more selected classification categories.

2. The audio player device of claim 1, wherein said user display device is adapted to simultaneously display one or more classification categories (46, 47, 49) and one or more filter selection options (50) on a common screen of said user display device (38).

3. The audio player device of claim 1, wherein said one or more classification categories include at least genre, artist, song, or album category.

4. The audio player device of claim 1, wherein said filter includes at least one genre, artist, song or album category.

5. The audio player device of claim 1, further including an I/O port (34) for receiving music content.

6. The audio player device of claim 1, wherein said storage device (36) includes a database.

7. The audio player device of claim 1, wherein the filters are selectable in the negative or the positive.

8. The audio player device of claim 1, wherein the microprocessor (32) is adapted to play all of the songs associated with the one or more selected classification categories in a random order.

9. The audio player device of claim 8, wherein the microprocessor (32) is adapted to play all of the songs associated with the one or more selected classification categories in a user definable order.

10. A method of presenting hierarchical information to a user, comprising the steps of:
A) presenting to a user one or more classification categories (57) of information associated with music content, wherein said music content includes songs and classification information associated with said songs,
B) in response to step A), presenting to a user (58), one or more selection options within the one or more classification categories and one or more filters, and prompting the user to make one or more selections from said one or more selection options.
C) if the user does not select at least one filter (60), compiling a playlist (59) of all songs encompassed by the specific selections made by the user in step B),
D) if the user does select at least one filter (64), applying the at least one filter selected by the user (66) to the selection options elected by the user in step B).

11. The method of presenting hierarchical information of a user of claim 10, wherein the result of step D) results in generating a playlist of songs (69) that are a subset of the songs encompassed by the specific selections made by the user in step B).

12. The method of presenting hierarchical information of a user of claim 10, wherein said one or more classification categories include at least one genre, artist, song or album category (38).

13. The method of presenting hierarchical information of a user of claim 10, wherein said at least one filter includes at least one genre, artist, song or album (38, 58).

14. The method of presenting hierarchical information of a user of claim 10, wherein said at least one filter is user selectable in the negative or the positive.

15. The method of presenting hierarchical information of a user of claim 10, further including playing the playlist in random order.

16. The method of presenting hierarchical information of a user of claim 10, further including playing the playlist in an order that is defined by the user.
